Europäisches Patentamt

European Patent Office

Office européen des brevets

(11) Publication number: **0 485 229 B1**

# EUROPEAN PATENT SPECIFICATION

(45) Date of publication of patent specification: **18.01.95**  (51) Int. Cl.⁶: **C05F 11/08**, A01G 1/04, A01N 63/04

(21) Application number: **91310347.9**

(22) Date of filing: **08.11.91**

(54) Water-dispersible granules comprising va mycorrhizal fungi, their preparation and use.

(30) Priority: **08.11.90 EP 90121406**

(43) Date of publication of application:
**13.05.92 Bulletin 92/20**

(45) Publication of the grant of the patent:
**18.01.95 Bulletin 95/03**

(84) Designated Contracting States:
**AT BE CH DE DK ES FR GB GR IT LI LU NL SE**

(56) References cited:
EP-A- 0 209 627
EP-A- 0 314 439
EP-A- 0 387 640

WORLD PATENTS INDEX LATEST Week 9123,
Derwent PublicationsLtd., London, GB; AN
91-168960 & JP-A-3103 124 (LION CORP) 3
April 1991

WORLD PATENTS INDEX LATEST Week 9122,
Derwent PublicationsLtd., London, GB; AN
91-158339 & JP-A-3091 420 (LION CORP) 17
April 1991

(73) Proprietor: SHELL INTERNATIONALE RE-
SEARCH MAATSCHAPPIJ B.V.
Carel van Bylandtlaan 30
NL-2596 HR Den Haag (NL)

(72) Inventor: **Baltruschat, Helmut**
Deyerstrasse 10-12
W-6532 Schweppenhausen (DE)
Inventor: **Mayer, Winfried**
Weedestrasse 26a
W-6501 Bubenheim (DE)
Inventor: **Dewenter, Manfred**
Isaac-Maus-Strasse 12
W-6551 Badenheim (DE)

(74) Representative: **Allam, Peter Clerk et al**
LLOYD WISE, TREGEAR & CO.
Norman House
105-109 Strand
London WC2R 0AE (GB)

**Description**

The present invention relates to compositions which are suitable for the improvement of plant growth, their preparation and use. More specifically, it discloses compositions for the inoculation of plants with vesicular-arbuscular mycorrhizal fungi and, optionally, antagonists against soil-borne pests and plant diseases.

The positive influence of vesicular-arbuscular mycorrhizal fungi on plant growth is generally accepted (R.G. Linderman, ISI Atlas of Science: Animal and Plant Sciences, Vol 1, Philadelphia 1988, p 183; J.L. Harley and S.E. Smith, Mycorrhizal Symbiosis, Academic Press, New York, 1983). This effect is based in particular on an increased uptake of phosphate. The stimulation of plant growth can very clearly be seen on phosphorus deficient soils. For example, soils with a high content of aluminium or iron, which fixes the natural phosphate as well as that from fertilisers, can often be found in the tropical and subtropical regions of South America, Central Africa, South East Asia and Australia. The specific capability of the vesicular-arbuscular mycorrhiza to make the not very soluble aluminium and iron phosphates more accessible for plants offers the possibility for a specific application in tropical areas (A.M. Moawad, Kali-Briefe (Buntehof) 17, 359 (1984), V. Gianinazzi-Pearson, Fertilizers and Agriculture 92, 3 (1986)). The increased nutrient uptake by mycorrhiza hosting plants is not only limited to phosphate, the uptake of other nutrients such as potassium, magnesium, copper or zinc also being improved. Moreover, the mycorrhizal fungi increase the resistance of plants to abiotic stress factors such as drought, periods of cold weather, salinity or acidity of soils (C.L. Powell and D.J. Bagyaraj (eds.) VA Mycorrhiza, CRS Press, Boca Raton, Fla., 1984). Thus the formation of a mycorrhiza is essential for most plants growing on less suitable locations, and, in the course of evolution, has helped the plants to colonise new habitats by adaptation to unfavourable growth conditions and, by that means, to widen the ecological range of a plant species (H. Peuss, Arch. Mikrobiol. 29, 112 (1958)).

The possible practical use of the vesicular-arbuscular mycorrhiza under the tillage conditions in Central Europe is looked at less from the point of view of an improved phosphate supply to the crop, though a more rational use of soil nutrients, e.g. nitrogen, might be considered. The application of efficient fungi having tolerance to high N- and P-fertilisation yielded positive results in maize under field conditions (H. Baltruschat, Zeitschrift f. Pflanzenkrankheiten und Pflanzenschutz 94, 419 (1987); H. Baltruschat, Angew. Botanik 61, 163 (1987)). However, the main focus for a specific use of the symbiosis in Central European intensive crop culture will primarily be on a general vitalisation of crops against moderate stress. This stress can be caused by suboptimal temperatures, temporary lack of water, soil-borne diseases or other important, but subacute damaging factors (F. Schonbeck, Mitteilungen aus der Biologischen Bundesanstalt fur Land- und Forstwirtschaft, Paul Parey, 1986, p 89).

The practical use of the vesicular-arbuscular mycorrhiza is especially relevant as the new orientation of agriculture aims at harmony between the environment and high performance crop production. The increase of the intensity of agriculture doubtlessly reaches its limit where ecological problems occur. Under these circumstances, the environmentally friendly and, simultaneously, economic production of food will rank high in the future. The vesicular-arbuscular mycorrhiza will play a role in this connection.

Vesicular-arbuscular mycorrhizal fungi are obligatory-biotrophic organisms, i.e. they depend upon the infection of roots of living plants for their development. The obligatory-biotrophic nature of the vesicular-arbuscular fungi and the difficult handling caused by this property hitherto conflicted with a practical use of this symbiosis.

First attempts to enclose vesicular-arbuscular mycorrhizal fungi in pellets and to distribute these with airplanes were described by C.L. Powell, Proceedings of the Ruakura FARMERS Conference, 1977. The pellets, which consisted of a mixture of soil and vesicular-arbuscular mycorrhizal inoculum, were coated with bentonite in order to increase the mechanical stability. This method of production of inoculum was not suitable for wide application because the pellets, having an average diameter of 1.5 cm were too heavy and, thus, too unwieldy. The method described by C.L. Powell in New Phytologist 83, 81 (1979) to pellet seed together with soil and mycorrhizal inoculum is problematic because of the time-consuming production of the pellets. Moreover, the germinability of the spores may be impaired by high humidity of the seed. However, the mechanical stability of the pellets is lower the drier the seed is (I.R. Hall, Soil Biology and Biochemistry 11,85 (1979)). In order to reduce the expenditure of time for the production of seed pellets, it has been tried to form the pellets from a mixture of clay, sand and vesicular-arbuscular mycorrhizal inoculum and to coat the pellets with the seed (I.R. Hall and A. Kelson, J. Agricultural Res. 24, 221 (1981)). However, the problem of the mechanical stability of the pellets could not satisfactorily be solved. Additionally, the inoculum is difficult to apply because it is necessary to place the pellet upon sowing in such a way that the seed is on the top side of the pellet. Only then is it guaranteed that the radicula grows through the mycorrhizal inoculum. A complete coating of the pellets with seed would cause a high expense of seed and, thus, could only be used for a few crops e.g. clover. D.S. Hayman, E.J. Morris and R.J. Page (Annals in Applied Biology 89, 247 (1981)) tested similar pellets, which comprised several seeds of red clover, with some success. Except for the fact that the problem of the low stability of the pellets cannot satisfactorily be solved by the addition of clay, an additional disadvantage of this method is that the germinability of the seeds is reduced by deficiency of oxygen caused by the inclusion.

The use of a seed pellet which consisted of vesicular-arbuscular mycorrhizal inoculum, peat, seeds and a binder has been disclosed in US 4,551,156. The inoculum was prevailingly obtained by the nutrient film method disclosed in US 4,294,037. The inclusion of the seed into the pellet should guarantee a close contact between the germinating root and the mycorrhizal inoculum. The use of peat as a substantial component of the pellets obviously does not interfere with the infectivity of the inoculum and enables an exceptionally good crosslinkage with a binder. However, the pellets based on peat/binder are extremely light and, thus, an addition of sand is obligatory for pelleting. This significantly reduces the concentration of the inoculum in the pellets. A further disadvantage is that the seeds have to be located at or close to the surface of the pellets in order to be sufficiently supplied with oxygen. The wide application of such unwieldy particles standardised by neither form nor size is not possible with the standard machines for drilling and fertilisation and this therefore opposes a wide propagation of these inocula for plant production. The inclusion of seeds into the pellets anyhow restricts the applicability because a special pellet would have to be developed.

Various other procedures for the production of mycorrhizal inoculum have been published. The incrustation of seeds with a mycorrhizal inoculum is among these procedures. Thereby, spores and small, mycorrhiza-infected root pieces were embedded into methyl cellulose and coated on seeds. As a result of their size, the mycorrhiza spores firmly barely adhere to the surface of the seeds. The fixation of the spores is disadvantageous since the radiculae quickly grow into the soil and do not get into contact with the fungus. Moreover, the germinability of the seed is decreased by oxygen deficiency. Up to now, the procedure has only been applied to pot plants and citrus seedlings (M.J. Hattingh and J.W. Gerdemann, Phytopathology 65, 1013 (1975)).

The production of mycorrhizal inoculum by use of the nutrient film technique known from horticulture is disclosed in EP-A-0 015 103. This method is based on the principle that mycorrhiza-containing plant roots are constantly washed round by a nutrient solution (B. Mosse and J.P. Thompson, Can. J. Bot. 62, 1523 (1984), R.P Elmes and B. Mosse, ibid. 1530). The technical equipment required for the production of mycorrhizal inoculum by the nutrient film technique is difficult to handle and expensive. Moreover, there is an increased hazard of the occurrence of water-loving pathogens which can be disseminated with the symbiont after infection of the roots (S.G. Evans, Plant Pathology 28, 45 (1979); S.E. Gold and M.E. Stanghellini, Phytopathology 75, 333 (1985); T.V. Price and P. Fox Austral. J Agric. Res. 37, 65 (1986); G. van Voorst, E.A. van Os and J.C. Zadoks, Neth. J. Pl. Path. 93, 195 (1987); K Thinggaard and A.L. Middelboe, J. Phytopathology 125, 343 (1989); J. Hockenhull and D.F. Jensen, Acta Horticulturae 133, 137 (1983)). Additionally, the inoculum produced by the nutrient film technique contains a lot of organic material in the form of roots as well as the vesicular-arbuscular mycorrhizal fungus. These roots slowly wither after use. Even if the roots are not contaminated with soil-borne phytopathogens,the decaying roots are a good substrate for soil-borne pathogens. Another serious disadvantage of this type of inoculum is a decrease in infectivity of the inoculum after a few weeks of storage time (D.J. Bagyaraj, VA Mycorrhiza, CRC Press, Boca Raton, Fla. 1986).

The mycorrhizal inoculum produced by the nutrient film technique may also serve as starting material for the liquid-drilling method. For the application of this method, chopped up mycorrhiza-containing roots or spores of mycorrhizal fungi are taken up in a viscous medium, e.g. aqueous methyl cellulose (4%). This viscous medium is subsequently mixed with germinated seeds of a crop and sown into rows with special equipment (D.S. Hayman and K.A. Hampson, Rothamsted Report for 1978, Part 1, 238 (1979); S. Nemec and J.J. Ferguson, Proc. North American Conf. Mycorrhizae, p.244 (1984)). As these inocula require a special, expensive application technique, this method only offers itself for space-limited cultures such as tree nurseries.

The difficulties in enrichment and standardisation could be prevented if the hitherto obligatory-biotrophic vesicular-arbuscular mycorrhizal fungi are propogated in axenic cultures. The first quasi-axenic cultures of vesicular-arbuscular mycorrhizal fungi were described by C.M Hepper, New Phytologist 88, 641 (1981) and ibid. 93, 537 (1983). However, investigations in the infection of plants with mycorrhizal fungi in closed, sterile hydroponic systems require expensive equipment (R.M. MacDonald, New Phytologist 89, 87 (1981)). The addition of sterilised vermiculite to such cultures, which is inoculated with mycorrhizal fungi, apparently improves the growth of root cultures under axenic conditions (EP-A-0,209,627). However, the expenditure for the products remains disproportionately high, so that a wide application for agriculture is ruled out.

The cultivation of ectomycorrhiza-infected plants in a nutrient medium as disclosed in US-4327181 is also state of the art. Inert materials such as vermiculite are added to the nutrient solution in order to bring it into a solid state. Ectomycorrhizal fungi, however, belong to completely different families of fungi (prevailingly Ascomycetes and Basidiomycetes) than the vesicular-arbuscular mycorrhizal fungi which are classified as Phycomycetes. As disclosed in US-4327181, the actual growth medium comprises specific, complex nutrient solutions by reason of the saprophytic way of life of the ectomycorrhizal fungi. These culture media are not applicable to vesicular-arbuscular mycorrhizal fungi because the latter depend on the colonisation of living plants, i.e. they are obligatory-biotrophic.

A further method for the production of inoculum of vesicular-arbuscular mycorrhizal fungi is based on the use of root-free, inorganic carriers (EP-0 163 840). The idea to use a root-free inoculum is actually not novel. It has already been disclosed in US-4,551,165 that the plant roots may be removed after a certain cultivation time of mycorrhiza-infected plants in peat and that the peat may then be used as root-free inoculum carrier. When calcinated expanded clay or other inorganic, porous carriers are used instead of peat, spores of vesicular-arbuscular mycorrhizal fungi attach to this porous material upon hydroponic cultivation of mycorrhiza-infected plants in this substrate under certain conditions. The expanded clay may be used as mycorrizal inoculum after removal of roots and drying (H.W. Dehne and G.F Backhaus, Z. Pfl. Krankh. Pfl. Schutz 93,415 (1986); H.W. Dehne, G.F. Backhaus and H. Baltruschat, Proc. North American Conf. Mycorrhizae, p 280 (1987)). The particle size of the expanded clay is adjustable to the particle size of commercial fertilizers so that the inoculum can be applied with standard equipment (H. Baltruschat, Gesunde Pflanzen 39, 510 (1988)).

The advantages of this method compared to those described above consists in that the inocula are easy to handle, can be highly enriched with mycorrhizal spores and are storable. However, the comparably low colonisation of the carrier with vesicular-arbuscular mycorrhizal fungal spores is less favourable, generally, less than 10% of the expanded clay particles contain spores (G. Grunewaldt-Stocker and H.W. Dehne, Z. Pfl. Krankh. Pfl. Schutz 96, 615 (1989)). The infectivity of this material is obviously partly based on a coating of the carrier with mycelium fragments which are considerably less storable than the spores. Thus, only the particles containing spores will remain infective over a longer period. Moreover, the sporocarpiae, which may contain thousands of mycorrhizal spores, are not used as a source of inoculum because the sporocarpiae do not attach to the expanded clay particles or invade their pores. Additionally, spores which were formed in the roots by e.g. Glomus intraradices are ruled out as an inoculum source. Large mycorrhizal spores which are attached to the surface of the expanded clay particles can be lost by abrasion. Calcinated expanded clay is not microbially degradable. Thus, when used for several years in agriculture, quite large amounts of this material will remain in the soil and probably alter its properties. Additionally, it contradicts the present efforts in plant production only to use materials which do not leave residues.

The disadvantages of the compositions and methods described above can be summarised as follows:
- they are unwieldy, work-intensive, not enrichable in large scale and, thus, unsuitable for a wide application.
- they possess low mechanical stability
- the inocula are only storable to a limited extent
- they require a special, work-intensive application technique
- the mycorrhiza spores possess a limited germinability
- the concentration of storable spores of mycorrhizal fungi in the composition is low and/or
- the compositions are not microbially degradable.

The aforementioned disadvantages seriously impair the use of compositions comprising vesicular-arbuscular mycorrhizal fungi or spores for the improvement of plant growth in agriculture. It has now been found that compositions comprising mycorrhizal inoculum and an organic binder obtained from microbial, yeast or chitin sources surprisingly are easy to handle, storable, have a high spore concentration and are universally applicable either as a granulate or dispersed in water.

Accordingly, the present invention provides a composition comprising spores, sporocarpiae and/or mycelium of vesicular-arbuscular mycorrhizal fungi and organic additives in the form of microbial, yeasty and/or chitinous material.

As vesicular-arbuscular mycorrhizal fungi (J.W. Gerdemann and J.M. Trappe, Mycologia Mem. 5, 1-76 (1976); J.M. Trappe and N.C. Schenck in "Methods and Principles of Mycorrhizal Research", N.C Schenck, ed., The American Phytopathological Society, St. Paul, USA, 1982) any vesicular-arbuscular mycorrhizal fungus may be used. Typical representatives of vesicular-arbuscular mycorrhizal fungi are members of the genera Glomus, Acaulospora, Scutellospora, Gigaspora, Enterophospora and Sclerocystis (N.C. Schenck and Y. Perez, "Manual for the Identification of VA Mycorrhizal Fungi" INVAM, Fifield Hall University of Florida, Gainsville, USA, 1987). Especially suitable are Glomus etunicatum, Glomus fasciculatus, Glomus mosseae, Glomus manihotis, Glomus intraradices, Acaulaspora laevis or Entrophospora colombiana. The organic additives may be obtained from various microbes, yeasts, animals or fungi, for example Escherichia coli, Bacillus subtilis, Saccharomyces cerevisieae, Saccharomyces carlsbergiensis, Penicillium-species, Actinomycetes-species, Aspergillus oryzae or Crustaceae like crill or shrimps. Prevailingly, the organic additives obtained from these sources are mucopolysaccharides or chitin. These materials may be specially prepared for the disclosed purpose, however, it is very convenient to use residues from fermentation, biotechnological production, or food and forage preparation processes. Chitin- or mucopolysaccharides-containing residues are residues from biotechnological production or fermentation. For example, when penicillin is manufactured, an end product and residue is the mycelium of Penicillium chrysogenum. Also the biotechnological use of yeasts for e.g. the production of beer, wine or fine chemicals, results in residues of biomass. Chitin is obtained, for example, upon utilisation of Crustaceae.

The physical properties of the composition may be improved by the addition of biologically inert material. Good effects in terms of mechanical stability were obtained by the addition of clayey soil and vermiculite. The ratio of the components can be easily adapted to the purpose. For easy application, the composition may be prepared in water dispersible form and/or granulated to pellets, preferably with uniform size. The compositions may then either be dispersed in water and sprayed onto the area to be treated or they can be applied with conventional drilling or fertilising equipment. The composition may additionally comprise roots of plants hosting vesicular-arbuscular mycorrhizal fungi, however, it is also advantageous to have root-free compositions, particularly for use as a dispersion in water. For all applications it is very advantageous to use a composition which is free of root-pathogenic fungi or bacteria.

The chitin or mucopolysaccharide additives in the compositions according to the invention replace the usual organic binders which have already been disclosed for the stabilisation of pellets (US 4,551,165). An amount of about 10% (w/w) is sufficient for stabilising the inoculum comprising spores, sporocarpiae and/or mycelium of vesicular-arbuscular mycorrhizal fungi in such a way that it is suitable for pelleting. The concentration of chitin or mucopolysaccharide additives may be increased to at least 10:1 without resulting in pellets which are too hard. The mechanical properties of the pellets are very important, because mechanically unstable pellets cannot be applied with conventional agricultural equipment. Pellets which are too brittle reduce the germinability of the mycorrhizal spores. US 4,551,165 discloses wood pulp as binder for the production of pellets on peat/sand bases. In this case, optimal properties of the pellets are achieved if the ratio of peat/sand inoculum and wood pulp is in the range from 1:1 to 1:3. Compared to that, the portion of binder in the composition according to the invention is clearly lower because only 10% of the total weight is binder and this is sufficient to guarantee mechanical stability of the pellets.

Binders based on cellulose or methylcellulose cross-link peat/sand mixtures in such a way that the pellets keep their brittle consistency. The chitin or mucopolysaccharide additives of the compositions according to the invention, however, yield water-dispersible pellets. The water-dispersibility results in application properties which cannot nearly be achieved by any other mycorrhizal inoculum known from prior art. The compositions according to the invention may be applied as pellets using conventional agricultural and horticultural drilling or fertilising equipment. This allows manifold applications of the compositions in nearly all areas of agri- and horticulture. Moreover, the compositions according to the invention may be dispersed in water and then applied with suitable ground devices or airplanes. Thus, new application areas are openended for vesicular-arbuscular mycorrhizal fungi. In particular, wide-area application on soils exposed to erosion may be treated this way. Revegetation of ski slopes, road embankments, refuse dumps, sand dunes in coastal areas etc. may be facilitated by the use of the water-dispersible composition. For wide-area application, it may be advantageous to increase the ratio of the chitin or mucopolysaccharide additives to inoculum to 10:1. When this type of composition is dispersed in water, it is possible to apply 1000 kg of the composition, corresponding to 100 kg of mycorrhizal inoculum, per hectare. The high amount of organic material which may be applied together with the mycorrhizal inoculum on areas with a deficient humus layer stimulates the formation of humus and the microbial activity in the soil. Thus, the chitin and/or mucopolysaccharide additives are a valuable addition to the mycorrhizal inoculum. Compared to the biologically and chemically inert expanded clay carriers disclosed in EP A 0 163 840, the soil fertility is positively influenced by the compositions according to the invention. Furthermore, the components of these compositions are almost completely degraded by soil microbes, whereas compositions known from prior art, e.g. EP A 0 163 840, introduce considerable amounts of undegradable residues into the soil.

The compositions according to the invention comprise high concentrations of vesicular-arbuscular mycorrhizal spores. For example, an average number of 105 spores of Glomus fasciculatus was found in each pellet of 2 - 3 mm diameter. When calcinated expanded clay is used as carrier according to EP A 0 163 840, only 10% of the particles contain those spores. Additionally, these particles contain approximately between 10 and 100 spores only. Thus, the compositions according to the invention comprise 10 to 100 times the amount of spores than the expanded clay particles disclosed in prior art.

For practical use in the field, the handling of the mycorrhizal compositions is of crucial importance in addition to their spore concentration. Prior to the present invention, the expanded clay compositions disclosed in EP A 0 163 840 were superior to other known prior art because of their comparatively simple handling. However, the size of these particles is very difficult to calibrate and, therefore, it is not possible efficiently to use common agricultural equipment for application. The compositions according to the invention may be manufactured into pellets of uniform size and, thus, can be applied using modern agricultural equipment which deposits pellets or seed at intervals in seed furrows thereby reducing the required dosage. In respect to the practical use of the compositions according to the invention, the unrestricted usability of existing equipment is a prerequisite for acceptance in practice. Thus, the possibility to process the compositions according to the invention to pellets of uniform size is clear progress in the handling of vesicular-arbuscular mycorrhizal fungi compared to other compositions known from prior art.

In addition, the compositions according to the invention may advantageously comprise antagonistic fungi, bacteria and/or actinomycetes suitable for the control of soil-borne pests and plant diseases, that is, so-called biological control agents. Especially suitable are antagonistic fungi selected from the group comprising Metarrhizium anisoplae, Beauveria bassiana, Beauveria brongniartii, Paeciliomyces lilacinus, Dactylella oviparasitica, Trichoderma viride, Trichoderma harzianum, Trichoderma koningii, Trichoderma hamatum and Actinomycetes, preferably Streptomyces spp.. The chitin and/or mucopolysaccharide additives stimulate the growth and enhance the distribution of the antagonistic microorganisms comprised in the compositions according to the invention, because these antagonistic microorganisms are able to degrade chitin and mucopolysaccharides and to use the materials as nutrient ("lunch packet"). Even without comprising antagonistic microorganisms, the compositions according to the invention promote the propagation of antagonistic microorganisms in the rhizosphere. When the compositions additionally comprise antagonistic microorganisms, the ratio of chitin and/or mucopolysaccharide additives to mycorrhizal inoculum may be in the range from 1:100 to 1:10.

The present invention also comprises a process for the preparation of such compositions in which a substrate comprising a mixture of clayey soil and vermiculite, in which plants infected with vesicular-arbuscular mycorrhizal fungi have been cultivated for at least two weeks, is mixed with microbial, yeasty and/or chitinous material. Typically, mycelium, spores and sporocarpiae of vesicular-arbuscular mycorrhizal fungi are produced by inoculating plants with surface-sterilised spores of the desired vesicular-arbuscular fungi. After cultivation of the infected plants for 1 to 5 months, the roots and the substrate they grow in are dried. Alternatively, the roots may be removed before drying the substrate. This is the primary inoculum which is then ground, mixed with the organic additives and granulated. For granulation, any conventional pelleting machinery may be used. For example, a rod of material can be continuously extruded at a constant speed and a blade set to cut the rod transversely at timed intervals, to form pellets. Alternatively, the composition could be moulded into small cubes or other desired shapes.

For the first time, the compositions according to the invention simultaneously enable the common application of symbiotic as well as antagonistic microorganisms by inclusion into one composition and thereby stimulate plant growth and plant health in a particularly desirable way. The invention therefore also provides a method for the improvement of plant growth which comprises applying a composition according to the invention to the present or future location of a plant and use of such a composition for the improvement of plant growth. Preferably, the composition is dispersed in water and sprayed onto the soil to be treated.

The following examples further illustrate the present invention and will enable others skilled in the art to understand it more completely. It should be understood, however, that the invention is not limited solely to the particular examples given below.

EXAMPLES

Example 1

Vesicular-arbuscular mycorrhizal fungi compositions

(a) Production of Primary Inoculum

The roots of axenicly cultivated wild marigold (Tagetes erecta "Double Eagle") were inoculated with surface-sterilised spores of Glomus etunicatum, G. fasciculatus, G. mosseae, G. manihotis, G. intraradices, Acaulospora laevis or Entrophospora colombiana and grown in a mixture of clayey soil (red loam: pH, 4.8; $N_t$, 0.02%; $C_t$, 0.72%; $P_2O_5$, 11 ppm; $K_2O$, 94 ppm; Mg, 40 ppm) and vermiculite (ratio 70:30).

The marigold seedlings were cultivated at 25,000 lux for 14 hours. The temperature was maintained at 20°C ±2°C. Water was added according to requirements. Fertilisation was accomplished with N (calcium ammonium nitrate, 120 mg/kg of substrate), P (monocalcium phosphate, 120 mg/kg), K (potassium oxide (50%), 150 mg/kg), Mg (magnesium oxide, 30 mg/kg) and a solution of trace elements according to Hoagland. Trace element solution according to Hoagland (D.R. Hoagland and W.C. Snyder, Amer. Soc. Horticult. Sci. 30,288 (1933)); amounts in g/18 litres of water (stock solution); one percent by volume of this solution per kg of substrate was used for fertilization.

| | |
|---|---|
| $Al_2(SO_4)_3$ | 1.0 |
| KI | 0.5 |
| KBr | 0.5 |
| $TiO_2$ | 1.0 |
| $SnCl_2.2H_2O$ | 0.5 |
| LiCl | 0.5 |
| $MnCl_2.4H_2O$ | 7.0 |
| $H_3BO_3$ | 11.0 |
| $ZnSO_4$ | 1.0 |
| $CuSO_4.5H_2O$ | 1.0 |
| $NiSO_4.6H_2O$ | 1.0 |
| $Co(NO_3)_2.6H_2O$ | 1.0 |

Prior to inoculation of the plants with G. mosseae, the pH value was raised to 5.9 by addition of lime.

After inoculation with mycorrhizal fungi, the plants were grown for three months. After this time, the substrate mixture was intensively interspersed with marigold roots which contained the mycorrhizal fungus. A randomised root sample of 10 plants was rinsed with water, treated with aqueous potassium hydroxide (10%) at 65°C for 10 hours and then rinsed with water three times. Subsequently, the roots were bleached by treatment with alkaline hydrogen peroxide (prepared by mixing $NH_4OH$, 3 ml, with $H_2O_2$, 10%, 30 ml, and water 567 ml) for 15 minutes. The bleached roots were rinsed with water three times and stained by treating them with acidic fuchsin/lactic acid solution (0.01%) at 65°C for 5 hours. Assessment of the VA mycorrhiza infection was carried out by the "gridline intersect" method according to M. Giovanetti and B. Mosse, New Phytol. 84, 489 (1980).

The number of mycorrhiza spores was determined by fractionated sieving of the soil. The fraction from the sieve with 45 m meshes was taken up with water and then a layer of concentrated aqueous sucrose was carefully placed underneath. After centrifugation (10,000 g, 10 minutes), the mycorrhiza spores were collected from the intermediate layer between water and sucrose with a pipette. They were thoroughly rinsed with water and counted.

All inoculated VA mycorrhizal fungi caused an intensive mycorrhization of plants which resulted in an infection ratio from 65% (A. laevis) to 95% (G. fasciculatus, G. intraradices). Moreover, all species formed a marked netting of external mycelium outside the roots in the substate. G. intraradices formed a high amount of spores in the intercellulary root cortex tissue. A large number of sporocarpiae and spores outside the roots could also be noted.

The inoculum formed under these conditions with the red loam substrate was suited as primary inoculum for pelleting because of the extensive infection of the plant roots by mycorrhizal fungi.

(b) Preparation of Granules

The primary inoculum, consisting of the mixture of red loam/vermiculite, was dried at room temperature. Alternatively, the roots of the primary inoculum were removed in order to obtain a root-free inoculum for granulation.

The air-dried primary inoculum described above was crumbled by hand or milled, using a hammer mill, to a particle size of less than 0.5 mm. The additional components of the granulate, i.e. organic additives originating from biotechnological production, were added to the pulverised soil-spores-roots or soil-spores mixture as powders and in the desired ratio. Brewers' yeast or mycelium from Penicillium chrysogenum (Biosol™, Biochemie, Linz, Austria) were used as organic additives for granulation.

In order to achieve a high homogenicity, all components were thoroughly mixed. This mixture was granulated by a perforated roll granulator. The granulation can also be carried out with an extruder or a pan granulator. Then the granules were dried at room temperature for one week. The granules were almost uniform in size and nearly spherical with a diameter of about 3 mm. Examples of formulation are compiled in Table 1.

The organic additives mechanically stabilised the granulate, even in a portion of about 10% of total weight. Despite the excellent mechanical stability, the granules were water dispersible so that the application could be carried out with the granulate as well as with an aqueous suspension.

**Table 1:** Examples of formulation.
(VAM, mycorrhizal fungus: <u>Glomus</u>
<u>manihotis</u>, <u>G</u>. <u>mosseae</u>, <u>G</u>.
<u>fasciculatus</u>, <u>Acaulospora</u> <u>laevis</u>,
<u>Entrophospora</u> <u>colombiana</u>)

| | |
|---|---|
| **Composition 1:** | |
| VAM + red loam/vermiculite + roots | 92% w/w |
| Biosol | 8% w/w |
| **Composition 2:** | |
| VAM + red loam/vermiculite + roots | 70% w/w |
| Biosol | 30% w/w |
| **Composition 3:** | |
| VAM + red loam/vermiculite + roots | 10% w/w |
| Biosol | 90% w/w |
| **Composition 4:** | |
| VAM + red loam/vermiculite | 80% w/w |
| Biosol | 20% w/w |
| **Composition 5:** | |
| VAM + red loam/vermiculite | 80% w/w |
| Brewers' yeast | 20% w/w |
| **Composition 6:** | |
| VAM + red loam/vermiculite | 91% w/w |
| Biosol | 9% w/w |
| **Composition 7:** | |
| VAM + red loam/vermiculite | 91% w/w |
| Brewers' yeast | 9% w/w |

(c) Determination of Spore Concentration in the Granules

Granules (40 g) comprising <u>Glomus</u> <u>etunicatum</u> (Table 1, Composition 1) or <u>G</u>. <u>manihotis</u> (Table 1, Composition 6) were suspended in water (450 ml) for 2 hours. The aqueous suspension was then poured through 2 sieves with mesh widths of 250 m and 45 m. The spores of the VA mycorrhizal fungi were held on the 45 m sieve, taken up in water and separated by centrifugation with a sucrose gradient as described above. The spores were counted with the aid of a stereo microscope (Table 2). When the number of spores was very high, a dilution series was used. The experiments were replicated four times.

**Table 2:** Number of spores of <u>G</u>. <u>etunicatum</u> and <u>G</u>. <u>manihotis</u> in pellets prepared according to Example 2. Average weight of a granule: Composition 1,0.073g; Composition 6, 0.040 g.

| Fungus | Composition | Number of Spores in granulate(40g) | Number of Spores in 1 granule |
|---|---|---|---|
| <u>Glomus</u> <u>etunicatum</u> | 1 | 58,660 | 107 |
| <u>Glomus</u> <u>manihotis</u> | 6 | 18,010 | 17 |

Comparably high concentrations were found in compositions comprising brewers' yeast instead of Biosol.

(d) <u>Vital staining of VA mycorrhiza spores</u>

In order to obtain an indication of the vitality of the VA mycorrhiza spores, they were stained with fluorescein diacetate (FDA). The FDA procedure followed the protocol of B.E. Soderstrom, Soil. Biol. Biochem. <u>9</u>, 59-63 (1977). A stock solution of FDA in acetone (2 M) was diluted with phosphate buffer (0.1 M, pH 7.5) to a final concentration of 10 g/ml). The mycorrhizal spores were stained in this solution and then transferred onto microscope slides. The assessment (Table 3) was carried out with the aid of an inverse microscope (magnification 32 - 400x; Zeiss, West Germany), a mercury lamp HBO 50 W (Schott, Mainz, F.R.G.) and a filter set BP 390-420/FT 425/LP 450 (Zeiss, Oberkochem, F.R.G.)

Table 3:    Fluorescence staining of VA mycorrhiza
            spores with fluorescein diacetate.  Mean
            value of 100 stained spores.  Control:
            spores of untreated inoculum.

| Fungus | Origin of Spores | Proportion of fluorescing spores (%) |
|---|---|---|
| Glomus etunicatum | control | 94 |
| | granulate | 95 |
| Glomus manihotis | control | 90 |
| | granulate | 88 |
| Acaulospora laevis | control | 89 |
| | granulate | 87 |

The results clearly show that the vitality of the mycorrhiza spores was fully conserved.

(e) Influence of mycorrhiza inoculum granules on plant growth

Maize (Zea mays) and wild marigold (Tagetes patula "Aurora Gold") were grown in a mixture of loamy sand and vermiculite (1:1) in the greenhouse (temperature, 20°C; light, 20,000 lux for 14 hours), whereby the mycorrhiza inoculum granules were added to the substrate in various amounts. After 6 weeks, the fresh weight of inoculated and untreated plants was determined (Table 4).

Table 4:    Fresh weight (g) of marigold (Tagetes patula
            "Aurora Gold") and maize (Zea mays) after
            inoculation with Glomus etunicatum.
            Inoculation with granules according to
            Example 2, Composition 1. Control: untreated
            plants.

| Plant | Inoculation with mycorrhiza granules [vol%] | | | Control |
|---|---|---|---|---|
| | 10 | 5 | 2.5 | |
| marigold | 25.2 | 26.6 | 26.2 | 21.3 |
| maize | 34.5 | 32.9 | 33.0 | 28.12 |

The plant growth was clearly stimulated by the mycorrhizal inoculum, whereby the amount of inoculum had no additional effect. Thus, the granules were suitable for inoculation of plants with mycorrhizal fungi.

(f) Infectivity of granules

Wild marigold (Tagetes patula "Aurora Gold") was grown as described in Example 5. For inoculation, formulations according to Example 2, Composition 1, comprising Glomus etunicatum or G. manihotis were used in various concentrations (Table 5).

Even at very low concentrations, the infectivity of the granulated mycorrhiza inoculum was as high as that of the untreated primary inoculum.

**Table 5:** Infectivity of granules according to Example 2, Composition 1, comprising Glomus etunicatum or G. manihotis. Control: primary inoculum. Plant: Tagetes patula "Aurora Gold", 6 weeks old.

| Fungus | Mycorrhization[%] after inoculation with granules (vol%) | | | | | Mycorrhization[%] after inoculation with primary inoculum |
|---|---|---|---|---|---|---|
| | 10 | 5 | 1.0 | 0.1 | 0.01 | 10 |
| Glomus etunicatum | 85 | 88 | 83 | 86 | 81 | 85 |
| Glomus manihotis | 76 | 81 | 74 | 79 | 71 | 80 |

(g) Storage Stability of the Granules

The infectivity of Glomus entunicatum and G. manihotis inocula were determined immediately after granulation and after storage for 30, 60 and 90 days (Table 6). The test was carried out according to Example 5 with wild marigold (Tagetes patula "Aurora Gold").

EP 0 485 229 B1

**Table 6:** Infectivity of granules comprising <u>Glomus</u> <u>etunicatum</u> or <u>G</u>. <u>manihotis</u> after various storage times.  Granules prepared according to Example 2, Composition 1.  Plant: <u>Tagetes</u> <u>patula</u> "Aurora Gold", 6 weeks old.

| Fungus | Storage Time of Granules [days] | Mycorrhization [%] after Inoculation with Granules [vol%] | | |
|---|---|---|---|---|
| | | 5 | 1.0 | 0.1 |
| <u>Glomus</u> <u>etunicatum</u> | 0 | 88 | 83 | 86 |
| | 30 | 85 | 82 | 87 |
| | 60 | 86 | 83 | 80 |
| | 90 | 82 | 78 | 85 |
| <u>Glomus</u> <u>manihotis</u> | 0 | 81 | 74 | 79 |
| | 30 | 78 | 78 | 76 |
| | 60 | 75 | 78 | 77 |
| | 90 | 77 | 76 | 76 |

The granules did not show any significant loss of infectivity upon storage.

Example 2

Vesicular-arbuscular mycorrhizal fungi compositions containing biological control agents

(a) Preparation of inoculum with detrimental fungi

A mixture of 100ml maize flour, 400ml sand (sterilised dry for 2 hours at 220°C), 100ml water and 1g glucose was sterilised for 30 minutes at 120°C, then stirred and used to fill 16cm glass plates. After 24 hours, the filled glass plates were sterilised again for 30 minutes at 120°C. Each plate was then inoculated with three pieces of agar containing the detrimental fungus in question. After 2-3 weeks of incubation at 20-25°C, the inoculum was ready for use.

(b) Efficacy of granules containing biological control agents

Granules were prepared as previously described containing the following biological control agents and organic additives:-

(i) Streptomyces 02422 + Biosol

(ii) Trichoderma viride + Biosol

(iii) Trichoderma hamatum + Biosol

(iv) Trichoderma harzianum + Biosol

These granules were then mixed with vermiculite in a pot to give concentrations of 1%, 2.5% and 5% volume of granules per pot. The inoculum containing the relevant detrimental fungi was placed half-way up the pot and the target plant (cucumber) was located at the top of the pot just under the surface

13

of the granule/vermiculite mixture. The following results were obtained:-

**(1) Results of the <u>Streptomyces</u> 02422 - granules with Biosol against the detrimental fungus <u>Pythium ultimum</u>**

| Treatment | Dose | Mean of visual assess-ment* | Mean of fresh-weight assess-ment (g) |
|---|---|---|---|
| Control | - | 0 | 3,2 |
| Granule of | 1 vol% | 0 | 3,5 |
| <u>Str.</u> 02422 | 2,5 vol% | 5 | 3,6 |
| <u>Pythium</u> <u>ultimum</u> | 0,22g/pot | 39 | 2,2 |
| <u>P.ultimum</u> + Granule of | 0,22g/pot + 1 vol% | 11 | 3,0 |
| <u>Str.</u> 02422 | 0,22g/pot + 2,5 vol% | 2 | 3,6 |

\* Expressed as percent growth inhibition:
0 = completely healthy; 100 = dead

As can be seen, the addition of granules containing <u>Streptomyces</u> 02422 markedly reduced the detrimental effect of <u>Pythium</u> <u>ultimum</u> on the plant and this was dependent on the quantity of granules used, although even 1 vol% granules/pot led to a significant reduction of the plant disease.

(2)  Results of the <u>Trichoderma</u> <u>viride</u> - granules with Biosol against the detrimental fungus Rhizoctonia <u>solani</u>

| Treatment | Dose | Mean of visual assessment* | Mean of fresh-weight assessment (g) |
|---|---|---|---|
| Control | - | 0 | 4,2 |
| <u>Rhizoctonia</u> <u>solani</u> | 0,20g/pot<br>0,05g/pot | 67<br>40 | 2,3<br>3,1 |
| <u>Tr</u>. <u>viride</u> | 2,5 vol% | 0 | 5,6 |
| <u>Rhizoctonia</u> <u>solani</u> +<br><u>Tr.</u> <u>viride</u> | 0,20g/pot + 2,5 vol%<br>0,05g/pot + 2,5 vol% | 32<br>30 | 3,7<br>4,0 |
| <u>Tr</u>. <u>viride</u> | 5 vol% | 0 | 5,0 |
| <u>Rhizoctonia</u> <u>solani</u> +<br><u>Tr</u>. <u>viride</u> | 0,20g/pot + 5 vol%<br>0,05g/pot + 5 vol% | 30<br>19 | 3,7<br>4,1 |

(3) Results of the <u>Trichoderma hamatum</u> - granules with Biosol against the detrimental fungus <u>Rhizoctonia solani</u>

| Treatment | Dose | Mean of visual assess- ment* | Mean of fresh- weight assess- ment (g) |
|---|---|---|---|
| Control | - | 0 | 4,2 |
| <u>Rhizoctonia</u> <u>solani</u> | 0,20g/pot 0,05g/pot | 67 40 | 2,3 3,1 |
| <u>Tr</u>. <u>hamatum</u> | 1 vol% | 12 | 4,6 |
| <u>Rhizoctonia</u> <u>solani</u> + <u>Tr</u>. <u>hamatum</u> | 1 vol% | 20 | 4,3 |
| <u>Tr</u>. <u>hamatum</u> | 2,5 vol% | 0 | 5,6 |
| <u>Rhizoctonia</u> <u>solani</u> + <u>Tr</u>. <u>hamatum</u> | 0,20g/pot + 2,5 vol% 0,05g/pot + 2,5 vol% | 36 47 | 3,3 4,4 |
| <u>Tr</u>. <u>hamatum</u> | 5 vol% | 0 | 5,9 |
| <u>Rhizoctonia</u> <u>solani</u> + <u>Tr</u>. <u>hamatum</u> | 0,20g/pot + 5 vol% 0,05g/pot + 5 vol% | 27 19 | 3,3 4,3 |

(4) Results of the <u>Trichoderma</u> <u>harzianum</u> - granules with Biosol against the detrimental fungus <u>Rhizoctoni solani</u>

| Treatment | Dose | Mean of visual assess- ment* | Mean of fresh- weight assess- ment (g) |
|---|---|---|---|
| Control | - | 0 | 4,2 |
| <u>Rhizoctonia</u> <u>solani</u> | 0,20g/pot<br>0,05g/pot | 67<br>40 | 2,3<br>3,1 |
| <u>Tr.harzianum</u> | 1 vol% | 2 | 4,7 |
| <u>Rhizoctonia</u> <u>solani</u> +<br><u>Tr.harzianum</u> | 0.05g/pot + 1 vol% | 17 | 4,5 |
| <u>Tr.harzianum</u> | 2,5 vol% | 0 | 6,0 |
| <u>Rhizoctonia</u> <u>solani</u> +<br><u>Tr.harzianum</u> | 0,20g/pot + 2,5 vol%<br>0,05g/pot + 2,5 vol% | 42<br>10 | 3,6<br>4,8 |
| <u>Tr.harzianum</u> | 5 vol% | 0 | 6,3 |
| <u>Rhizoctonia</u> <u>solani</u> +<br><u>Tr.harzianum</u> | 0,20g/pot + 5 vol%<br>0,05g/pot + 5 vol% | 42<br>17 | 3,4<br>4,7 |

As can be seen, the damage to the plant caused by <u>Rhizoctonia</u> <u>solani</u> is indicated by both the decrease of the fresh-weight and the visual assessment and the amount of damage is dependent upon the concentration (0,20 and 0,05g/pot). Even the lower concentrations of granules containing <u>Trichoderma</u> led to a significant reduction of the damage caused by <u>Rhizoctonia</u> <u>solani</u>. However, the efficacy of the granules against <u>Rhizoctonia</u> <u>solani</u> was significantly improved when 5 vol% of the granules were added to the pots.

Example 3

Biotechnological production waste as a source for biological control agents

Method

Growth enhancement of antagonistic fungi by means of Biosol addition was demonstrated by the following agar plate test in which petri dishes were filled with wateragar and Biosol as follows:-

1. Wateragar
2. Wateragar + 1 % Biosol
3. Wateragar + 5 % Biosol
4. Wateragar + 10 % Biosol
5. Wateragar + 20 % Biosol

Then, either (a) a hole of 0,4 cm agar was plugged out of the petri dish and replaced by agar containing mycelium of an antagonistic fungus;

or

(b) a hole of 0,4cm agar was plugged out and filled with a spore suspension of the antagonistic fungus (0,05ml).

In the case of (a), swabs were made around the replaced piece of agar after 3-21 days and the number of spores was counted with a ″Fuchs-Rosenthal-Chamber″ whereas, in the case of (b) the diameter of the mycelium was measured after 3-14 days, depending on the fungal species.

Results

Growth enhancement by Biosol (diameter in mm)

| Antagonistic fungi: | Metarhizium anisopliae | Beauveria brongiartii |
|---|---|---|
| Wateragar | 14,17 | 30,00 |
| Wateragar + 1% Biosol | 16,17 | 36,00 |
| Wateragar + 5% Biosol | 26,17 | 31,17 |
| Wateragar + 10% Biosol | 33,50 | 34,00 |
| Wateragar + 20% Biosol | 20,17 | 32,50 |

| Antagonistic fungi: | Streptomyces 0237 * | Streptomyces 02422 | Streptomyces 02371 |
|---|---|---|---|
| Wateragar | 9,00 | 12,00 | 10,75 |
| Wateragar + 1% Biosol | 12,25 | 12,38 | 12,13 |
| Wateragar + 5% Biosol | 12,25 | 14,25 | 13,38 |
| Wateragar + 10% Biosol | 14,00 | 12,38 | 12,63 |
| Wateragar + 20% Biosol | 11,00 | 9,50 | 10,50 |

| Antagonistic fungi: | Trichoderma viride | Trichoderma hamatum | Trichoderma harzianum |
|---|---|---|---|
| Wateragar | 49,38 | 49,13 | 55,25 |
| Wateragar + 1% Biosol | 52,25 | 59,50 | 70,63 |
| Wateragar + 5% Biosol | 59,75 | 76,38 | 81,88 |
| Wateragar + 10% Biosol | 37,88 | 61,38 | 69,50 |
| Wateragar + 20% Biosol | 30,50 | 42,38 | 53,13 |

*    Evaluated with method (b); all other evaluations according to method (a)

Growth enhancement by Biosol (Amount of spores/petri dish)

| Antagonistic fungi: | Strepto-myces 0237 | Strepto-myces 02422 | Strepto-myces 02371 |
|---|---|---|---|
| Wateragar | $2,3*10^4$ | $6,9*10^4$ | $4,5*10^4$ |
| Wateragar + 1% Biosol | $1,2*10^8$ | $4,0*10^7$ | $3,4*10^7$ |
| Wateragar + 5% Biosol | $1,1*10^9$ | $2,1*10^9$ | $1,1*10^9$ |
| Wateragar + 10% Biosol | $1,5*10^9$ | $1,9*10^9$ | $1,3*10^9$ |
| Wateragar + 20% Biosol | $1,8*10^9$ | $1,6*10^9$ | $4,9*10^8$ |

| Antagonistic fungi: | Tricho-derma viride | Tricho-derma hamatum | Tricho-derma harzianum |
|---|---|---|---|
| Wateragar | $3,5*10^4$ | $2,5*10^4$ | $1,6*10^5$ |
| Wateragar + 1% Biosol | $1,9*10^5$ | $2,2*10^4$ | $4,5*10^6$ |
| Wateragar + 5% Biosol | $8,5*10^4$ | $1,9*10^4$ | $2,5*10^6$ |
| Wateragar + 10% Biosol | $5,9*10^4$ | $1,7*10^4$ | $3,2*10^5$ |
| Wateragar + 20% Biosol | $2,3*10^4$ | $1,5*10^4$ | $2,5*10^4$ |

Example 4

Viability of granules containing biotechnological production waste as carriers for biological control agents

Methods

The number of spores was determined before and after granulation with the "Fuchs-Rosenthal-Chamber" (a) or with the "Soil Dilution Plate Method" (b).

(a) In the Fuchs-Rosenthal-Chamber, spores are counted in volumes of 0,2272mm. The chamber is separated into 16 big squares, each of which is separated into 16 small squares. Depending on the actual number of spores, the amount of spores in a special number of squares is counted. The number is multiplied by the chamber- and square-factor and results in the number of spores per ml.

(b)For the soil dilution plate method, the suspension is diluted several times 1:10. From each dilution 1 ml is transferred to sterile culture plates and 10-15 ml cool molten agar is added. The plates are incubated and after about three days it is possible to count the colonies. Multiplication of this number by the dilution-and the suspension factor leads to the number of spores per ml.

EP 0 485 229 B1

This method only detects the living spores.

Results

| Antagonistic fungi in granule with Biosol | Determination Method | Number of spores/conidia per g mixture before granulation | Number of spores/conidia per g granule | Remarks |
|---|---|---|---|---|
| Metarhizium anisopliae (as conidia) | a | $1*10^8$ | $2*10^7$ | |
| Metarhizium anisopliae (as blastospores) | a | $7*10^7$ | $4*10^7$ | |
| Beauveria brongiartii (as conidia) | a | $3*10^8$ | $8*10^8$ | growth enhancement |
| Beauveria brongiartii (as blastospores) | a | $2*10^7$ | $8*10^8$ | growth enhancement |
| Streptomyces 0237 | b | $2*10^7$ | $4*10^6$ | |
| Streptomyces 02422 | b | $2*10^8$ | $8*10^6$ | |

## Results (cont'd)

| Antagonistic fungi in granule with Biosol | Determination Method | Number of spores/conidia per g mixture before granulation | Number of spores/conidia per g granule | Remarks |
|---|---|---|---|---|
| Streptomyces 02371 | b | $3*10^8$ | $2*10^7$ | |
| Trichoderma viride | a | $9*10^6$ | $5*10^7$ | growth enhancement |
| Trichoderma hamatum | a | $2*10^6$ | $4*10^7$ | growth enhancement |
| Trichoderma harzianum | a | $5*10^5$ | $5*10^7$ | growth enhancement |

This table shows that high amounts of spores are maintained during the formulation process. In the case of Beauveria brongiartii and Trichoderma spp. the amount was even elevated after granulation.

**Claims**

1. A composition comprising spores, sporocarpLae and/or mycelium of vesicular-arbuscular mycorrhizal fungi and organic additives in the form of microbial, yeasty and/or chitinous material.

**2.** A composition according to Claim 1 characterised in that it is free of plant roots.

**3.** A composition according to Claim 1 or 2 characterised in that it additionally comprises antagonistic fungi, bacteria and/or actinomycetes suitable for the control of soil-borne pests and plant diseases.

**4.** A composition according to Claim 3 characterised in that the antagonistic fungi are selected from the group comprising <u>Metarrhizium</u> <u>anisoplae</u>, <u>Beauveria</u> <u>bassiana</u>, <u>Beauveria</u> <u>brongniartii</u>, <u>Paeciliomyces</u> <u>lilacinus</u>, <u>Dactylella</u> <u>oviparasitica</u>, <u>Trichoderma</u> <u>viride</u>, <u>Trichoderma</u> <u>harzianum</u>, <u>Trichoderma</u> <u>koningii</u>, <u>Trichoderma</u> <u>hamatum</u> and <u>Actinomycetes</u>.

**5.** A composition according to any one of the preceding claims characterised in that it comprises a mixture of clayey soil and vermiculite in any ratio desired.

**6.** A composition according to any one of the preceding claims characterised in that it is water dispersible.

**7.** A composition according to any one of the preceding claims characterised in that the microbial, yeasty and/or chitinous material is obtained from residues of biotechnological production.

**8.** A composition according to any one of the preceding claims characterised in that it is free of root-pathogenic fungi and/or bacteria.

**9.** A process for the preparation of a composition according to any one of the preceding claims characterised in that a substrate comprising a mixture of clayey soil and vermiculite, in which plants infected with vesicular-arbuscular mycorrhizal fungi have been cultivated for at least two weeks, is mixed with microbial, yeasty and/or chitinous material.

**10.** Use of a composition according to any one of Claims 1 to 8 for the improvement of plant growth.

**11.** A method for the improvement of plant growth which comprises applying a composition according to any one of Claims 1 to 8 to the present or future location of a plant.

**12.** A method according to Claim 11 characterised in that the composition is dispersed in water and sprayed onto the soil to be treated.

## Patentansprüche

**1.** Zusammensetzung, welche Sporen, Sporenbehälter und/oder das Mycel von vesikulär-büscheligen Mikorrhizapilzen und organische Additive in der Form von mikrobiellem Material, Hefe- und/oder Chitinmaterial enthält.

**2.** Zusammensetzung nach Anspruch 1, dadurch gekennzeichnet, daß sie frei von Pflanzenwurzeln ist.

**3.** Zusammensetzung nach Anspruch 1 oder 2, dadurch gekennzeichnet, daß sie zusätzlich antagonistische Pilze, Bakterien und/oder Actinomyceten zur Bekämpfung von im Boden vorkommenden Schädlingen und Pflanzenkrankheiten enthält.

**4.** Zusammensetzung nach Anspruch 3, dadurch gekennzeichnet, daß die antagonistischen Pilze aus einer Gruppe ausgewählt sind, die Metarrhizium anisoplae, Beauveria bassiana, Beauveria brongniartii, Paeciliomyces lilacinus, Dactylella oviparasitica, Trichoderma viride, Trichoderma harzianum, Trichoderma koningii, Trichoderma hamatum und Actinomyceten umfaßt.

**5.** Zusammensetzung nach einem der vorhergehenden Ansprüche, dadurch gekennzeichnet, daß sie ein Gemisch aus toniger Erde und Vermiculit in irgendeinem gewünschten Verhältnis umfaßt.

**6.** Zusammensetzung nach einem der vorhergehenden Ansprüche, dadurch gekennzeichnet, daß sie in Wasser dispergierbar ist.

7. Zusammensetzung nach einem der vorhergehenden Ansprüche, dadurch gekennzeichnet, daß das mikrobielle Material, das Hefe- und/oder Chitinmaterial aus den Rückständen einer biotechnologischen Produktion gewonnen wird.

8. Zusammensetzung nach einem der vorhergehenden Ansprüche, dadurch gekennzeichnet, daß sie frei von wurzelpathogenen Pilzen und/oder Bakterien ist.

9. Verfahren zur Herstellung einer Zusammensetzung nach einem der vorhergehenden Ansprüche, dadurch gekennzeichnet, daß ein Substrat, welches ein Gemisch aus toniger Erde und Vermiculit umfaßt, in welchem mit vesikulär-büscheligen Mikorrhizapilzen infizierte Pflanzen während wenigstens zwei Wochen kultiviert worden sind, mit mikrobiellem Material, Hefe- und/oder Chitinmaterial vermischt wird.

10. Verwendung einer Zusammensetzung nach einem der Ansprüche 1 bis 8 zur Verbesserung des Pflanzenwachstums.

11. Verfahren zur Verbesserung des Pflanzenwachstums, welches das Aufbringen einer Zusammensetzung nach einem der Ansprüche 1 bis 8 auf den gegenwärtigen oder zukünftigen Standort einer Pflanze umfaßt.

12. Verfahren nach Anspruch 11, dadurch gekennzeichnet, daß die Zusammensetzung in Wasser dispergiert und auf den zu behandelnden Boden aufgesprüht wird.

**Revendications**

1. Une composition comportant des spores, des sporocarpiae et/ou du mycélium de mycorhizes à vésicules et arbuscules et d'additifs organiques sous la forme de produit microbien, du type levure et/ou chitineux.

2. Une composition selon la revendication 1, caractérisée en ce qu'elle est dépourvue de racines de plante.

3. Une composition selon la revendication 1 ou 2, caractérisée en ce qu'elle comporte en outre des champignons, des bactéries et/ou des actinomycètes antagonistes, appropriés pour le contrôle des parasites issus du sol et des maladies des plantes.

4. Une composition selon la revendication 3, caractérisée en ce que les champignons antagonistes sont choisis dans le groupe constitué par les Metarrhizium anisoplae, Beauveria bassiana, Beauveria brongniartii, Paeciliomyces lilacinus, Dactylella oviparasitica, Trichoderma viride, Trichoderma harzianum, Trichoderma koningii, Trichoderma hamatum et les Actinomycetes.

5. Une composition selon l'une quelconque des revendications précédentes, caractérisée en ce qu'elle comporte un mélange de terre argileuse et de vermiculite selon un rapport quelconque souhaité.

6. Une composition selon l'une quelconque des revendications précédentes, caractérisée en ce qu'elle est dispersible dans l'eau.

7. Une composition selon l'une quelconque des revendications précédentes, caractérisée en ce que le produit microbien, du type levure et/ou chitineux est obtenu à partir de résidus de production biotechnologique.

8. Une composition selon l'une quelconque des revendications précédentes, caractérisée en ce qu'elle est dépourvue de champignons et/ou de bactéries pathogènes pour les racines.

9. Un procédé pour la préparation d'une composition selon l'une quelconque des revendications précédentes, caractérisé en ce qu'un substrat comportant un mélange de terre argileuse et de vermiculite, dans lequel les plantes infectées par les mycorhizes à vésicules et arbuscules, ont été cultivées pendant au moins deux semaines, et mélangées avec un produit microbien, du type levure et/ou chitineux.

**10.** L'utilisation d'une composition selon l'une quelconque des revendications 1 à 8, pour l'amélioration de la croissance des plantes.

**11.** Un procédé pour améliorer la croissance des plantes, qui consiste à appliquer une composition selon l'une quelconque des revendications 1 à 8 à l'endroit présent ou futur où se trouve une plante.

**12.** Un procédé selon la revendication 11, caractérisé en ce que la composition est dispersée dans l'eau puis pulvérisée sur le sol à traiter.